## Europäisches Patentamt
## European Patent Office
## Office européen des brevets

(19)

(11) Publication number: **0 066 362**
**B1**

(12)

# EUROPEAN PATENT SPECIFICATION

(45) Date of publication of patent specification: **19.02.86**

(51) Int. Cl.⁴: **F 15 B 11/16, A 01 G 23/02**

(21) Application number: **82301934.4**

(22) Date of filing: **15.04.82**

(54) Fluid control system.

(30) Priority: **22.05.81 PCt/us81/00689**

(43) Date of publication of application:
**08.12.82 Bulletin 82/49**

(45) Publication of the grant of the patent:
**19.02.86 Bulletin 86/08**

(84) Designated Contracting States:
**BE DE FR GB**

(56) References cited:
**DE-A-2 736 804**
**US-A-3 584 537**
**US-A-3 922 855**

(73) Proprietor: **CATERPILLAR TRACTOR CO.**
**100 Northeast Adams Street.**
**Peoria Illinois 61629 (US)**

(72) Inventor: **Muller, Thomas P.**
**26, Cayman Drive**
**Montgomery Illinois 60538 (US)**
Inventor: **Wirt, Leon A.**
**313 Essington Road**
**Joliet Illinois 60435 (US)**

(74) Representative: **Brunner, Michael John et al**
**GILL JENNINGS & EVERY 53-64 Chancery Lane**
**London WC2A 1HN (GB)**

Courier Press, Leamington Spa, England.

## Description

This invention relates to a fluid control system which selectively, controllably supplies pressurized fluid to several work elements. Two separate fluid sources within the fluid control system each controllably, selectively supply pressurized fluid to a preselected single work element under preselected conditions of operation.

In fluid control systems having a plurality of work elements, it is common practice to provide the work elements with pressurized fluid from a single fluid source by interconnecting the control valves of the work elements in an interrupted series circuit. Certain ones of the work elements therefore have priority over the other work elements. In such a system, the work elements having less priority are generally not operational when the work elements having the greater priority are functionally operational. In certain fluid control systems using interrupted series circuit, the work elements having less priority may be partially operational by modulation of the control valves which control the higher priority work elements. However, such systems are generally inefficient and require difficult manipulation of the fluid controls by the operator.

As it is often desirable to operate several work elements of a work vehicle simultaneously in order to save time and energy and make a work operation more efficient it is known to provide several work elements with separate fluid circuits having individual pumps and controls. However, this increases the costs of the fluid control system, adds weight and bulk to the overall machine, and represents waste.

DE—A—2736804 discloses a fluid control system having a first and a second pump; first, second and third work elements; first control means for controllably delivering pressurized fluid from the first pump to the first or second work element; and second control means for controllably delivering pressurized fluid from the second pump to the third work element. In this known control system means are also provided for producing a signal when the first work element is to be activated and the second control means is arranged to deliver pressurized fluid from the second pump to the second work element only in response to receiving the signal. The means for producing the signal are responsive to a pilot pressure.

This known control system makes it possible to operate at least two work implements of a priority system simultaneously and at full power by making the second pump available to the lesser priority work element only when the higher priority work element is operated.

According to the present invention a fluid control system having a first and a second source of pressurized fluid, first, second and third work elements, first control means for controllably delivering pressurized fluid from the first source to the first or the second work element and second control means for controllably delivering pressurized fluid from the second source to the third work element; means being provided for producing a signal when the first work element is to be activated, and the second control means being arranged to deliver pressurized fluid from the second source to the second work element only in response to receiving the signal, is characterized in that the signal is produced only in response to pressurized fluid being delivered to the first work element, and that the second control means includes a flow control valve to limit the maximum amount of pressurized fluid delivered from the second source to the third work element, the remainder being available to the second work element.

By provision of the flow control valve according to the invention the maximum volume of fluid to the third work element is limited. Only a portion of the available fluid delivered by the second source passes the flow control valve, the remainder can be caused to operate the second work element. The dependence of the signal on the pressurized fluid being delivered to the first work element guarantees a change over from the first to the second source only when the first work element is actually in operation.

One example of a control system according to the invention will now be described with reference to the accompanying diagram of the control system circuit.

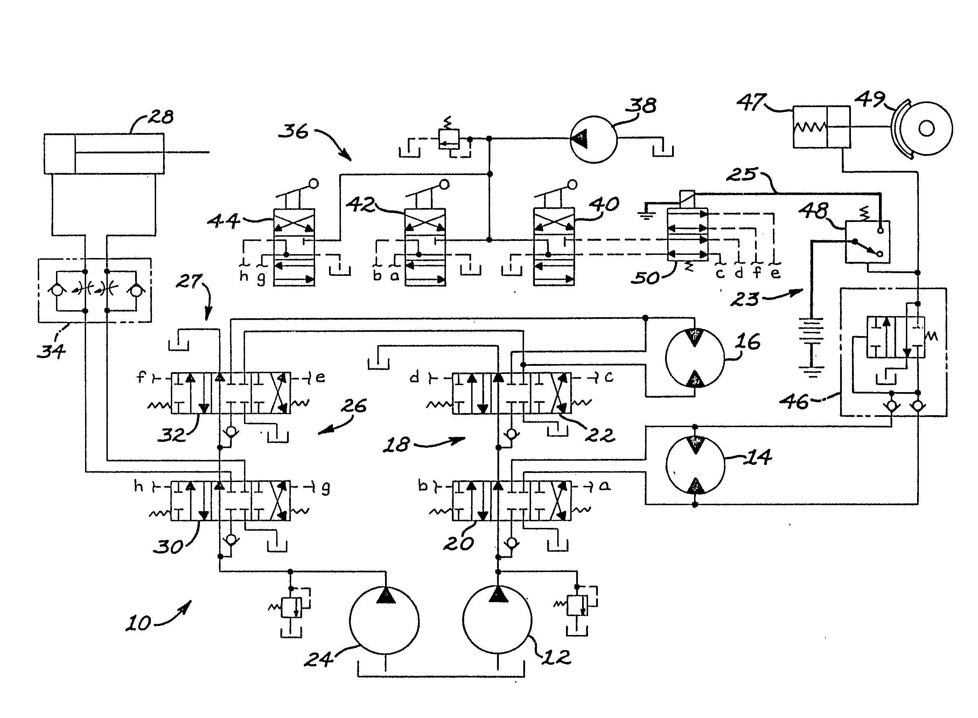

Referring to the drawing, a fluid control system 10 has a first source of pressurized fluid 12, first and second work elements ˙14, 16, and a first control means 18 for controllably delivering pressurized fluid to one of the first and second work elements 14, 16. Work element 14 is preferably a fluid motor, such as a track motor, which can be rotated in either direction, for driving the tracks of a track-type machine, such as a tree harvester. Work element 16 is preferably a fluid motor such as a swing motor for rotating the upper portion of the tree harvester. The first control means 18 has first and second pilot operated control valves 20 and 22 for controllably delivering pressurized fluid from the pump 12 to work elements 14 and 16. Valves 20 and 22 are arranged in interrupted series which provides that work element 14 has priority over work element 16. Therefore, work element 16 cannot be operated from pump 12 when work element 14 is functioning.

The fluid control system 10 includes a first means 23 for transmitting a signal on line 25 only in response to pressurized fluid being delivered to the first work element 14. The control system 10 has a third work element 28, a second source of pressurized fluid, including a pump 24, and a second means 27 for delivering pressurized fluid from the second fluid source 24 to the second work element 16 only in response to receiving the signal on line 25. The second means 27 includes a second control means 26.

The second control means 26 has third and fourth pilot operated control valves 30 and 32 which controllably deliver pressurized fluid from the second source 24 to the work element 28 and the work element 16, as will be hereinafter more fully explained. Control valves 30, 32 are arranged in interruptable series and the control means 26 includes a flow control valve 34 which limits the maximum amount of pressurized fluid being directed from the second source 24 to the third work element 28 so that a controlled portion of the total amount of the pressurized fluid from the second source 24 is simultaneously deliverable to the second and third work elements 16, 28.

The first means 23 for transmitting the signal on the line 25 includes a pressure actuated travel alarm switch 48, the signal operating a selector valve 50.

The fluid control system 10 has a pilot actuating system 36 having a plurality of pilot actuating valves 40, 42, 44 for actuation of the control valves 22 and 32, 20, 30 respectively and a third source of fluid pressure 38. For clarity, the connecting lines between the pilot actuating valves 40, 42, 44, and the associated control valves 20, 22, 30, 32, have been broken. In the drawing, line ends with common letters are in fluid communication with each other.

A brake valve 46 and the travel alarm switch 48 are in fluid communication with the track motor 14. When the track motor 14 is activated, the brake valve 46 is shifted to pressurize cylinder 47 which releases the track brakes 49, and at the same time activates the travel alarm switch 48 and its associated alarm.

Actuation of the travel alarm switch 48 transmits a signal 25 to a selector valve 50, which shifts the valve 50 to bring lines e and f into communication with the actuating valve 40. With the selector valve 50 in this position, actuating valve 40 is in communication with control valve 32, and in response to shifting valve 40, pressurized fluid is delivered from pump 24 via control valve 32 to the work element 16, the selector valve 50 being actuated only in response to receiving the signal from the travel alarm switch which indicates that the motor 14 is actuated.

When the motor 14 is not being operated the selector switch remains deactivated and lines c and d are brought into communication with the actuating valve 40 to enable fluid to be delivered to the work element 16 from the pump 12 via the control valve 22.

With this system it is possible to provide simultaneous power to the track motor 14, the swing motor 16 and the work element 28. To accomplish this, the actuating valve 44 is shifted which provides pilot fluid to lines "g" or "h" to shift control valve 30 to an intermediate position at which a portion of the available flow is conducted to the work element 28 while the remaining flow is directed downstream to the control valve 32. Under these circuit conditions, the flow control valve 34 limits the maximum volume of fluid available to the work element 28, thus forcing the remainder of available flow to the downstream control valve 32. The centering springs in control valve 30 are heavier than those in control valve 2, consequently the pilot pressure being directed to the control valve 30 will shift control valve 30 only to the intermediate position and never to the fully shifted position that occurs when the same pilot pressure is directed to valve 32. It is to be recognized that the pilot valve 44 could modulate the pilot pressure to the control valve 30 which would only shift the control valve to the intermediate position, thus eliminating the need for heavier centering springs as is noted above. This arrangement as set forth above will automatically allow the control valve 30 to be moved to the intermediate position to supply fluid to the work element 28 and simultaneously allow fluid to be directed downstream to the control valve 32 for operation of the work element 16.

## Claims

1. A fluid control system (10) having a first (12) and a second (24) source of pressurized fluid, first, second and third work elements (14, 16, 28), first control means (18) for controllably delivering pressurized fluid from the first source (12) to the first (14) or the second (16) work element and second control means (26) for controllably delivering pressurized fluid from the second source (24) to the third work element (28), means (23) being provided for producing a signal when the first work element (14) is to be activated, and the second control means (26) being arranged to deliver pressurized fluid from the second source (24) to the second work element (16) only in response to receiving the signal (25), characterized in that the signal (25) is produced only in response to pressurized fluid being delivered to the first work element (14), and that the second control means (26) includes a flow control valve (34) to limit the maximum amount of pressurized fluid delivered from the second source (24) to the third work element (28), the remainder being available to the second work element (16).

2. A control system according to claim 1, wherein the means (23) for producing the signal includes a pressure actuated switch (48) responsive to the pressure delivered to the first work element (14) and a selector valve (50) actuated by the switch (48) for activating the second control means (26) to deliver pressurized fluid from the second source 24 to the second work element (16).

3. A control system according to claim 1 or claim 2, including a pilot actuating system (36) having a third source of fluid pressure (38) and a plurality of actuating valves (40, 42, 44), the third source of fluid pressure (38) being controllably selectively deliverable to the first and second control means (18, 26) by the actuating valves (40, 42, 44) to actuate the control means (18, 26).

## Patentansprüche

1. Strömungsmittelsteuersystem (10) mit einer ersten (12) und einer zweiten (24) Quelle von unter Druck stehendem Strömungsmittel ersten, zweiten und dritten Arbeitselementen (14, 16, 28), ersten Steuermitteln (18) zur steuerbaren Lieferung von unter Druck stehendem Strömungsmittel von der ersten Quelle (12) an das erste (14) oder das zweite (16) Arbeitselement und zweite Steuermittel (26) zur steuerbaren Lieferung von unter Druck stehenden Strömungsmittel von der zweiten Quelle (24) an das dritte Arbeitselement (28), Mittel (23) zur Erzeugung eines Signals dann, wenn das erste Arbeitselement (14) zu aktivieren ist, und wobei die zweiten Steuermittel (26) derart angeordnet sind, daß sie unter Druck stehendes Strömungsmittel von der zweiten Quelle (24) an das zweite Arbeitselement (16) nur infolge des Empfangs des Signals (25) liefern, dadurch gekennzeichnet, daß das Signal (25) nur erzeugt wird infolge der Lieferung von unter Druck stehenden Strömungsmittel an das erste Arbeitselement (14), und daß die zweiten Steuermittel (26) ein Strömungssteuerventil (34) aufweisen, um die Maximalmenge an unter Druck stehendem Strömungsmittel geliefert von der zweiten Quelle (24) an das dritte Arbeitselement (28) zu begrenzen, wobei der Rest für das zweite Arbeitselement (16) verfügbar ist.

2. Steuersystem nach Anspruch 1, wobei die Mittel (23) zur Erzeugung des Signals einen druckbetätigten Schalter (48) aufweisen, der auf den vom ersten Arbeitselement (14) gelieferten Druck anspricht, und ein zweites Wählventil (50) betätigt durch den Schalter (48) zur Aktivierung der zweiten Steuermittel (26) zur Lieferung von unter Druck stehendem Strömungsmittel von der zweiten Quelle (24) an das zweite Arbeitselement (16).

3. Steuersystem nach Anspruch 1 oder 2 mit einem Pilotbetätigungssystem (36) mit einer dritten Quelle für Strömungsmitteldruck (38) und einer Vielzahl von Betätigungsventilen (40, 42, 44), wobei die dritte Quelle von Strömungsmitteldruck (38) steuerbar seliktiv lieferbar an die ersten und zweiten Steuermittel (18, 26) durch die Betätigungsventile (40, 42, 44) ist, um die Steuermittel zu betätigen.

**Revendications**

1. Système de commande de fluide moteur (10) comprenant une première (12) et une seconde (24) sources de fluide sous pression, un premier, un second et un troisième organes de travail (14, 16, 28), un premier moyen de commande (18) pour fournir de manière commandable au premier (14) ou au second (16) organe de travail un fluide sous pression provenant de la première source (12), et un second moyen de commande (26) pour fournir de manière commandable au troisième organe de travail (28) un fluide sous pression provenant de la seconde source (24); des moyens (23) étant prévus pour engendrer un signal (25) lorsque le premier organe de travail (14) doit être rendu actif, et le second moyen de commande (26) étant disposé de manière à délivrer au second organe de travail (16) un fluide sous pression provenant de la seconde source (24) uniquement en réponse à la réception du signal (25), et caractérisé en ce que le signal (25) est engendré uniquement en résponse à la fourniture du fluide sous pression au premier organe de travail (14), et en ce que lediit second moyen de commande (26) comporte une valve de commande d'écoulement (34) pour limiter la quantité maximale de fluide sous pression délivrée par la seconde source (24) au troisième organe de travail (28), le reste étant à la disposition du second organe de travail (16).

2. Système de commande selon la revendication 1, dans lequel le moyen (23) destiné à engendrer le signal comprend un commutateur (48) actionné par la pression et sensible à la pression délivrée au premier organe de travail (14), et une valve sélectrice (50) actionnée par le commutateur (48) pour rendre actif le second moyen de commande (26) afin de fournir au second organe de travail (16) le fluide sous pression provenant de la seconde source (24).

3. Système de commande selon la revendication 1 ou la revendiction 2, comprenant un système actionné par un pilote (36) comportant une troisième source de pression de fluide (38) et plusieurs valves d'actionnement (40, 42, 44), la troisième source de pression de fluide (38) étant apte à alimenter sélectivement et de manière commandable les premier et second moyens de commande (18, 26) au moyen des valves d'actionnement (40, 42, 44) afin de rendre actif les moyens de commande (18, 26).